# EUROPEAN PATENT APPLICATION

(11) **EP 3 434 655 A1**
(43) Date of publication of application: **30.01.2019**
(21) Application number: 17769642.4
(22) Date of filing: 26.01.2017
(51) Int. Cl.: C04B 5/00, C21C 5/28, C21C 7/00

(54) **METHOD FOR ELUTING CALCIUM FROM STEEL SLAG AND METHOD FOR RECOVERING CALCIUM FROM STEEL SLAG**

(30) Priority: 24.03.2016 JP 2016060493
(71) Applicant: Nisshin Steel Co., Ltd., Chiyoda-ku Tokyo 100-8366 (JP)
(72) Inventor: FUKUI, Yasushi C/O NISSHIN STEEL CO., LTD, Tokyo 100-8366 (JP); ASABA, Akihiro C/O NISSHIN STEEL CO., LTD, Tokyo 100-8366 (JP); FUJII, Takahiro C/O NISSHIN STEEL CO., LTD, Tokyo 100-8366 (JP)
(74) Representative: Patentanwaltskanzlei WILHELM & BECK
(86) International application number: PCT/JP2017/002651
(87) International publication number: WO 2017/163595

(57) **Abstract**

The purpose of the present invention is to provide a method for eluting calcium from steel slag such that more calcium can be eluted into an aqueous solution containing carbon dioxide from the steel slag. The present invention comprises carrying out, in the following order, a step of subjecting a calcium compound contained in the steel slag to hydration and a step of bringing the steel slag subjected to the hydration into contact with the aqueous solution containing carbon dioxide. Furthermore, in the present invention, the aqueous solution containing carbon dioxide is brought into contact with the steel slag while the steel slag is being pulverized or the surface of the steel slag is being ground. As a result of these methods, more calcium can be easily eluted into the aqueous solution containing carbon dioxide from the steel slag.

## Description

### Technical Field

The present invention relates to a method for eluting calcium from steelmaking slag, and a method for recovering calcium from steelmaking slag.

### Background Art

Steelmaking slag (such as converter slag, pretreatment slag, secondary refining slag and electric furnace slag) generated during a steelmaking process is used in various applications, for example, as cement materials, road base materials, construction materials and fertilizers (see NPLs 1 to 3). Some of steelmaking slag not used for the above applications is landfilled.

Steelmaking slag is known to contain elements, such as phosphorus (P), calcium (Ca), iron (Fe), silicon (Si), manganese (Mn), magnesium (Mg), and aluminum (Al). The element contained most in steelmaking slag is calcium which is used in a large amount during a steelmaking process. Typically, calcium occupies about 20 mass% to 50 mass% of the total mass of steelmaking slag.

Steelmaking slag contains calcium in the forms of, for example, free lime (remaining quicklime (CaO) which is fed during the steelmaking process, or quicklime precipitated during solidification), calcium hydroxide (Ca(OH)₂) or calcium carbonate (CaCO₃) each generated from the free lime reacting with water vapor or carbon dioxide in the air, and/or calcium silicate (such as Ca₂SiO₄ or Ca₃SiO₅) or calcium iron aluminum oxide (Ca₂(Al₁₋ₓFex)₂O₅) each generated from the free lime reacting with, for example, silicon or aluminum during the solidification (hereinafter, the compounds containing calcium in steelmaking slag are also collectively referred to as "calcium compounds").

Calcium carbonate and calcium oxide are major slag-forming materials in pig iron during an iron-making process and steel making processes, and used as, for example, a modifier for the basicity and viscosity of the slag, or a dephosphorizing agent of molten steel. In addition, calcium hydroxide obtained by adding water to calcium oxide is used as a neutralizer for, for example, acids in a draining process. Therefore, recovering the calcium compounds contained in steelmaking slag, and reusing the same in the iron-making process is expected to reduce iron-making costs.

It is predicted that in the future the number of public engineering works utilizing steelmaking slag as, for example, road base materials, construction materials and cement materials may decrease, or land that can be used for landfilling steelmaking slag may decrease. From this view point, it is also required to reduce the volume of steelmaking slag that is reused or landfilled, by recovering calcium compounds contained in the steelmaking slag.

Calcium in steelmaking slag may be recovered by eluting the same in an acidic aqueous solution, such as hydrochloric acid, nitric acid or sulfuric acid. However, it is difficult to reuse the salt of calcium with the above acid generated by the method. For example, calcium chloride generated by eluting calcium from steelmaking slag into hydrochloric acid can be reused as an oxide by heating the same; however, the cost for processing toxic chloride gas generated during the heating is disadvantageously high. Recovering calcium from steelmaking slag by eluting the same into an acidic aqueous solution also requires costs for purchasing acids and disposing the acids after the eluting process.

The disadvantage regarding the usage of acids, meanwhile, may become irrelevant when calcium is recovered by eluting the same from steelmaking slag into an aqueous solution containing carbon dioxide (hereinafter, also simply referred to as a "CO₂ aqueous solution") (see PTLs 1 to 3).

PTL 1 describes a method in which carbon dioxide is blown into an aqueous solution having calcium eluted from converter slag to allow calcium carbonate to settle out, thereby recovering the calcium carbonate. During this procedure, the lower limit of the pH is maintained at about 10 for suppressing the generation of calcium hydrogen carbonate which is highly soluble in water. Although PTL 1 does not describe a specific way for maintaining the pH at 10 or more, the inventors consider that the pH is maintained at 10 or more by adjusting the amount of blown carbon dioxide.

PTL 2 describes a method in which fractured steelmaking slag is separated into an iron-condensed phase and a phosphorus-condensed phase, calcium compounds in the phosphorus-condensed phase are dissolved in rinse water containing carbon dioxide dissolved therein, and then the rinse water is heated to 50 to 60°C to allow calcium hydrogen carbonate therein to settle out as calcium carbonate, thereby recovering the calcium carbonate.

PTL 3 describes a method for recovering calcium compounds by eluting the same from steelmaking slag in multiple processes. In the method, 2CaO/SiO₂ phase and phosphorus in a state of solid solution therein are preferentially eluted by immersing steelmaking slag (pretreatment slag) several times in water containing carbon dioxide blown therein.

### Citation List

### Patent Literature

PTL1
   Japanese Patent Application Laid-Open No. S55-100220
PTL 2
   Japanese Patent Application Laid-Open No. 2010-270378
PTL 3
   Japanese Patent Application Laid-Open No. 2013-142046

### Non-Patent Literature

NPL 1
   Masao NAKAGAWA "Current Status on the Effective Utilization of Iron and Steelmaking Slag" Lecture Text of Nos. 205 and 206 NISHIYAMA Memorial Technical Course, The Iron and Steel Institute of Japan, June, 2011, p.25-56
NPL 2
   "Kankyo-shizai Tecckou suragu (Environmental Materials, Iron and Steel Slag)" Nippon Slag Association, January, 2014
NPL 3
   Takayuki FUTATSUKA et al., "Dissolution Behavior of Elements in Steelmaking Slag into Artificial Seawater" Tetsu-to-Hagane (Iron and Steel) Vol. 89, No.4, January, 2014, P.382-387

### Summary of Invention

### Technical Problem

As described above, recovery of calcium from steelmaking slag provides various advantages, and thus there is always a demand for increasing a recovery rate of calcium from steelmaking slag.

In the method described in PTL 1, a higher amount of blown carbon dioxide leads to a pH lower than 10, and in contrast, a lower amount thereof leads to the decrease in the precipitation amount of calcium. Therefore, the amount of blown carbon dioxide should be precisely adjusted for increasing a recovery rate of calcium, which makes a recovery process complicated and increases recovery cost.

The method described in PTL 2 uses a mineral acid, and therefore a large amount of the mineral acid and the salt thereof with calcium remains after the precipitation and recovery of calcium as calcium carbonate. Separation of the mineral acid and the salt requires a large amount of water and high-temperature heating. Accordingly, the method described in PTL 2 suffers complicated processes and increased recovery cost. Further, when steelmaking slag is washed with rinse water containing carbon dioxide (aqueous solution containing calcium hydrogen carbonate) to dissolve calcium in the slag, the pH of the rinse water having calcium dissolved therein is neutral to weak alkaline as the rinse water contains calcium hydrogen carbonate. When mixing the rinse water with a liquid leached by the mineral acid to neutralize the leached liquid and precipitate calcium carbonate, the mixed liquid is acidified due to the mineral acid, thereby increasing the dissolution amount (solubility) of calcium in the aqueous solution. This lowers the recovery efficiency of calcium because a large amount of calcium still remains in the mixed liquid even when calcium carbonate is precipitated.

In the method described in PTL 3, it is necessary to further increase the number of processes of dissolving calcium compounds for increasing a recovery rate of calcium. This complicates a recovery process and a process for uniting the recovered calcium compounds, and thus increases recovery cost.

The conventional methods thus have a disadvantage in that any effort for increasing a recovery rate of calcium results in a complicated recovery process to lengthen the recovery time, thereby increasing the recovery cost. The recovery rate of calcium would be easily increased when the amount of calcium compounds eluted into a CO₂ aqueous solution is increased.

However, PTLs 1 and 2 do not suggest any effort for increasing the amount of calcium compounds eluted into a CO₂ aqueous solution. The method described in PTL 3 may be capable of increasing total elution amount of calcium by increasing the number of processes of dissolving calcium compounds; however, as described above, this may results in the processes being complicated and the recovery cost being increased in this method.

In view of the above disadvantage, the present invention is made with an object to provide a method for eluting calcium from steelmaking slag, which can elute a larger amount of calcium from the steelmaking slag into a CO₂ aqueous solution, and a method for recovering the calcium eluted by the method for the eluting.

### Solution to Problem

In view of the above object, the present invention relates to a method for eluting calcium from steelmaking slag, which includes steps in the following order: subjecting the steelmaking slag to hydration treatment; and bringing the steelmaking slag subjected to the hydration treatment into contact with an aqueous solution containing carbon dioxide.

The present invention also relates to a method for eluting calcium from steelmaking slag, which includes a step of bringing the steelmaking slag into contact with an aqueous solution containing carbon dioxide, while the steelmaking slag is pulverized or the surface of the steelmaking slag is ground.

In addition, the present invention relates to a method for recovering calcium from steelmaking slag, which includes a step of eluting calcium from the steelmaking slag by one of the above methods; and a step of recovering the eluted calcium.

### Advantageous Effects of Invention

The present invention provides a method for eluting calcium from steelmaking slag, which can elute a larger amount of calcium from the steelmaking slag into a CO₂ aqueous solution, and a method for recovering the calcium eluted by the method for the eluting.

### Brief Description of Drawings

FIG. 1 is a flowchart of a method according to an embodiment of the present invention for eluting calcium;
FIG. 2 is a flowchart of hydration treatment in the embodiment;
FIG. 3 is a flowchart of hydration treatment in the first modification of the embodiment;
FIG. 4 is a flowchart of the second modification of the embodiment;
FIG. 5 is a flowchart of a method according to another embodiment of the present invention for recovering calcium;
FIG. 6 is a flowchart of a step of bringing steelmaking slag into contact with a CO₂ aqueous solution in another embodiment of the present invention; and
FIG. 7 is a flowchart of a step of recovering calcium in another embodiment of the present invention.

### Description of Embodiments

Steelmaking slag contains calcium in the forms of, for example, free lime, calcium hydroxide (Ca(OH)₂), calcium carbonate (CaCO₃), calcium silicate (Ca₂SiO₄ or Ca₃SiO₅) and/or calcium iron aluminum oxide (Ca₂(Al₁₋ₓFex)₂O₅), as described above.

The free lime, which is easily dissolved in a CO₂ aqueous solution, typically exists in steelmaking slag only in an amount of less than about 10 mass%. On the other hand, calcium silicate and calcium iron aluminum oxide typically exists in steelmaking slag in an amount of about 25 mass% to 70 mass%, and about 2 mass% to 30 mass%, respectively. Therefore, when calcium contained in calcium compounds other than the free lime, such as calcium silicate and calcium iron aluminum oxide, can be eluted into a CO₂ aqueous solution more easily, the amount of calcium eluted from steelmaking slag into the CO₂ aqueous solution may increase, and it is possible to shorten the time for recovering calcium from the steelmaking slag.

However, calcium silicate, calcium iron aluminum oxide and the like typically dissolve slowly in a CO₂ aqueous solution.

In addition, calcium has high solubility in a CO₂ aqueous solution, but silicon, aluminum, iron and the like has low solubility in a CO₂ aqueous solution. Therefore, when dissolving calcium silicate and calcium iron aluminum oxide in a CO₂ aqueous solution, calcium is eluted, but silicon, aluminum, iron and the like may remain on the surface of the steelmaking slag as a hydroxide, carbonate and/or hydrate thereof. Silicon, aluminum, iron and the like with low solubility in a CO₂ aqueous solution may also be precipitated on the surface of the steelmaking slag after being eluted. Iron, manganese and the like contained in iron oxides, calcium iron aluminum oxide and the like in steelmaking slag also have low solubility. Therefore, when the iron oxides, calcium iron aluminum oxide and the like are slightly eluted into a CO₂ aqueous solution, iron, manganese and the like may be precipitated on the surface of the steelmaking slag. It is considered that those substances remaining or precipitated on the surface of the steelmaking slag prevent the surface of the steelmaking slag from contacting the CO₂ aqueous solution, thereby lowering the elution rate of calcium compared to an ideal state.

The present inventors have found that calcium compounds dissolve more easily in a CO₂ aqueous solution by previously subjecting steelmaking slag to hydration treatment, or bringing the steelmaking slag into contact with the CO₂ aqueous solution while the steelmaking slag is pulverized or the surface of the steelmaking slag is ground, and completed the present invention.

In the following, more specific examples of the methods of the present invention for eluting calcium, and for recovering calcium will be described.

### 1. Method for eluting Calcium from Steelmaking Slag

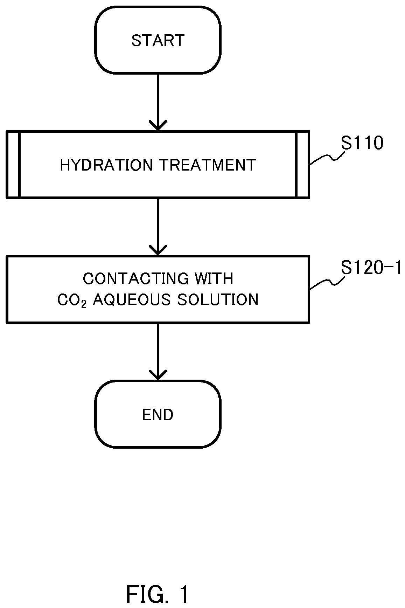

FIG. 1 is a flowchart of a method according to an embodiment of the present invention for eluting calcium from steelmaking slag. As illustrated in FIG. 1, the method according to the present embodiment for eluting calcium from steelmaking slag includes a step of subjecting the steelmaking slag to hydration treatment (Step S110: hereinafter also referred to as "first step"), and a step of bringing the steelmaking slag subjected to the hydration treatment into contact with a CO₂ aqueous solution (Step S120-1: hereinafter also referred to as "second step").

### [First Step: Hydration Treatment of Steelmaking Slag]

In the present step, steelmaking slag is subjected to hydration treatment (Step S110).

Any steelmaking slag may be used as long as the steelmaking slag is discharged during a steel making process. Examples of the steelmaking slag include converter slag, pretreatment slag, secondary refining slag and electric furnace slag.

Steelmaking slag discharged during a steel making process may be used as it is, or steelmaking slag fractured after the discharging may be used. When using fractured steelmaking slag, the fractured slag particles preferably have a maximum particle diameter of 1,000 µm or less (hereinafter, the particles are also simply referred to as "slag particles," and simply referred "steelmaking slag" includes both the fractured particles and non-fractured steelmaking slag). Slag particles with the maximum particle diameter of 1,000 µm or less have a larger surface area per volume, and allow water or a CO₂ aqueous solution to satisfactorily permeate through the steelmaking slag. This enables hydration of a large amount of calcium compounds in the present step, and elution of a larger amount of calcium in a below-described second step. The steelmaking slag can be fractured until the maximum particle diameter thereof falls within the above range using a conventional crusher. From the above view, the maximum particle diameter of the slag particles is preferably 500 µm or less, more preferably 250 µm or less and even more preferably 100 µm or less. The maximum particle diameter of the slag particles can be reduced to fall within the above range by, for example, further fracturing the fractured slag particles using a crusher, such as a hammer mill, a roller mill or a ball mill.

For preventing unnecessary elution of iron into water to be used in the present step and in the second step, metal iron may be removed from the steelmaking slag prior to the hydration treatment. Any conventional magnetic separator may be used to remove metal iron from steelmaking slag. Metal iron is removed preferably after the steelmaking slag is fractured, and more preferably after the steelmaking slag is pulverized, for increasing the removal efficiency of metal iron.

As the steelmaking slag, remaining-after-filtration slag may be used, which is obtained by placing steelmaking slag into a container including water therein, and leaching free lime, calcium hydroxide, and calcium on the top surface of calcium compounds, followed by filtration. Using the remaining-after-filtration slag means using slag from which calcium has been partly eluted, and thus a load on a below-described second step can be reduced. Further, filtered water containing leached calcium therein, which is simultaneously obtained, is a highly alkaline aqueous solution having a pH of 11 or more (hereinafter, also simply referred to as "highly alkaline leaching water"). The highly alkaline leaching water can be used for precipitation of a solid component containing calcium during the recovery of calcium (fourth step), as described below. The highly alkaline leaching water can also be used in applications that require an alkaline aqueous solution, for example, as a neutralizer for acidic waste water. Further, using the remaining-after-filtration slag for subjecting to hydration treatment by below-described still standing with contained water gives advantages such that kneading with water is not necessary.

Hydration treatment may be performed by a method and under conditions which can hydrate any calcium compound contained in steelmaking slag, preferably any calcium compound other than free lime, and more preferably calcium silicate or calcium iron aluminum oxide.

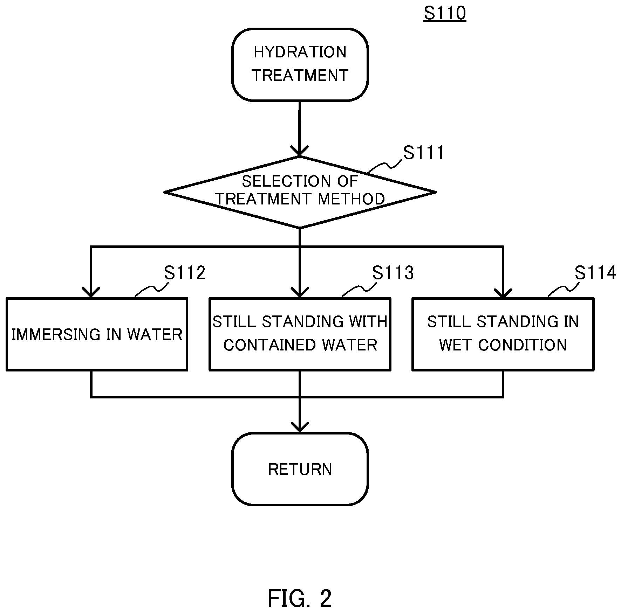

As illustrated in FIG. 2, the flow chart describing specific examples of hydration treatment (Step S110) in the present embodiment, the specific examples of the hydration treatment include the following methods: treatment of immersing steelmaking slag in water (Step S112: hereinafter, also simply referred to as a "immersing in water"), treatment of adding water to slag particles and kneading the mixture into a paste, followed by leaving the paste to stand (Step S113: hereinafter, also simply referred to as "still standing with contained water"), and treatment of leaving steelmaking slag to stand in a container including water vapor at the relative humidity of 70% or more (Step S114: hereinafter, also simply referred to as "still standing in wet condition"). Any one of the methods can satisfactorily bring steelmaking slag into contact with water. When performing the hydration treatment by the still standing in wet condition, the relative humidity is preferably 70% or more for ensuring adherence of water to slag particles by satisfactorily condensing water vapor between the slag particles by capillary condensation.

The hydration treatment (Step S110) may be performed by only one of the methods of immersing in water (Step S112), still standing with contained water (Step S113), still standing in wet condition (Step S114) and the like, or by two or more of the above methods in any order.

As illustrated in FIG. 2, the hydration treatment (Step S110) includes a step of selecting one or more treatment methods for performing the hydration treatment from the above methods (Step S111), and a step of performing the hydration treatment by the selected one or more methods of immersing in water (Step S112), still standing with contained water (Step S113), still standing in wet condition (Step S114) and the like. In the step of selecting (Step S111), below-described first modification step (Step S112-1) may be selected.

When subjecting steelmaking slag to the hydration treatment, obtained are calcium silicate hydrates and calcium hydroxide (Ca(OH)₂) from calcium silicate by the reaction represented by the following equation 1, and hydroxides of calcium oxides from calcium iron aluminum oxide by the reaction represented by the following equation 2 (hereinafter, compounds containing calcium, which can be obtained by the hydration treatment are also collectively referred to as "Ca hydrates"):

2(2CaOSiO₂) + 4H₂O → 3CaO2SiO₂·3H₂O + Ca(OH)₂ ... (Equation 1)

2CaO·1/2(Al₂O₃·Fe₂O₃) + 10H₂O → 1/2(4CaO·Al₂O₃ · 19H₂O) + HFeO₂ ... (Equation 2)

(equation 2 is an example in which X is 1/2 in calcium iron aluminum oxide (Ca₂(Al₁₋ₓFex)₂O₅)).

The Ca hydrates generated, for example, by the above reactions easily dissolve in a CO₂ aqueous solution. Subjecting steelmaking slag to hydration treatment thus makes it possible to elute calcium derived from, for example, calcium silicate and calcium iron aluminum oxide contained in the steelmaking slag more easily.

In addition, the sum of the volume of compounds generated by the hydration treatment is usually larger than the sum of the volume of the corresponding compounds before the reaction. During the hydration treatment, free lime in the steelmaking slag is partly eluted into water used for the treatment. Subjecting steelmaking slag to hydration treatment thus generates cracks inside slag particles, and the slag particles are more likely to disintegrate from these cracks. Such disintegration of the slag particles reduces the particle diameter of the slag particles, and increases the surface area per volume thereof, as well as allowing water or a CO₂ aqueous solution to satisfactorily permeate through the steelmaking slag. This enables hydration of a large amount of calcium compounds in the present step, and elution of a larger amount of calcium in a below-described second step. Therefore, solely performing the exemplified hydration treatment is capable of eluting calcium in a satisfactory amount.

During the performance of hydration treatment by immersing in water (Step S112), or still standing with contained water (Step S113), water used therefor preferably contains less than 300 mg/l of carbon dioxide including, for example, non-ionized free carbonate, and ionized hydrogen carbonate ions (HCO₃⁻). With the carbon dioxide content being less than 300 mg/l, calcium compounds other than free lime and calcium hydroxide are less likely to be eluted into the water used for the hydration treatment, and thus most of calcium contained in steelmaking slag can be eluted into the CO₂ aqueous solution in the second step, which less likely complicates a recovery process of calcium. Further, when the water contains a large amount of carbon dioxide, carbon dioxide is reacted with calcium eluted from free lime, calcium hydroxide and the like, and generated calcium carbonate is precipitated to cover the surface of the slag particles, which makes hydration reactions less likely to proceed. However, when the carbon dioxide content is less than 300 mg/l, the prevention of hydration reactions caused by the precipitation of calcium carbonate is less likely to occur. Industrial water usually contains less than 300 mg/l of carbon dioxide, and therefore, industrial water to which carbon dioxide is not intentionally added or mixed is preferred as the water to be used for the hydration treatment performed by immersing in water (Step S112), or still standing with contained water (Step S113).

During the performance of the hydration treatment by immersing in water (Step S112), or still standing with contained water (Step S113), the water used for the hydration treatment may have a temperature at which the water is not violently evaporated at the most. For example, the temperature of the water is preferably 100°C or less when steelmaking slag is subjected to the hydration treatment at substantially atmospheric pressure. When the hydration treatment is performed under a higher pressure by using, for example, an autoclave, the water temperature may be more than 100°C, as long as the temperature is lower than the boiling point of the water under the pressure during the hydration treatment. Specifically, the water temperature during the hydration treatment performed by immersing in water (Step S112) is preferably 0°C or more and 80°C or less, more preferably 30°C or more and 80°C or less. While there is no limitation to the upper limit of the water temperature, a temperature of 300°C or less is preferred when performing the hydration treatment under a higher pressure by using, for example, an autoclave, from the view point of the pressure resistance property of an apparatus, and in an economical aspect. The water temperature during the hydration treatment performed by still standing with contained water (Step S113) is preferably 0°C or more and 70°C or less.

When subjecting steelmaking slag to the hydration treatment by still standing in wet condition (Step S114), the relative humidity may be increased by introducing water vapor into a gas, such as air, nitrogen (N₂), oxygen (O₂), argon (Ar) and helium (He), or a gas composed only of water vapor may be used. While the relative humidity and temperature in the container may be set to any values, the temperature of a gas to which water vapor is introduced at substantially atmospheric pressure may be 0°C or more and 100°C or less, preferably 10°C or more and 100°C or less, and the relative humidity of the gas may be 70% or more. The gas may be stirred for more uniform hydration of calcium compounds.

When subjecting steelmaking slag to the hydration treatment by still standing in wet condition (Step S114) using a gas composed only of water vapor, it is preferred to heat the water vapor, thereby increasing the water vapor pressure to the atmospheric pressure or more. Setting the water vapor pressure to atmospheric pressure or more enables easier filling of the container with water vapor, which can, for example, omit pressure reduction previous to the introduction of water vapor into the container. This enables reduction of facility cost and management cost, thereby performing easier and less expensive hydration treatment. While the water vapor pressure is set to the atmospheric pressure or more, the water vapor temperature may be, for example, 100°C or more. As with the case of an autoclave, while there is no limitation to the upper limit of the water temperature, a temperature of 300°C or less is preferred from the view point of the pressure resistance property of an apparatus, and in an economical aspect.

The duration of the hydration treatment (Step S110) may be set to any period of time in accordance with the average particle size of the slag and the temperature during the hydration treatment (e.g., the temperature of water or air containing water vapor). A smaller average particle size of the slag or a higher temperature during the hydration treatment enables performance of the hydration treatment in a shorter duration.

For example, when subjecting steelmaking slag, with the maximum particle diameter of the slag particles thereof of 1,000 µm or less, to the hydration treatment by immersing in water (Step S112) at normal temperature, the duration of the hydration treatment may be about 8 hours without interval, preferably 3 hours or more and 30 hours or less. When performing the hydration treatment by the immersing in water at 40°C or more and 70°C or less, the duration of the hydration treatment is preferably 0.6 hours or more and 8 hours or less, without interval.

In addition, when subjecting steelmaking slag, with the maximum particle diameter of the slag particles thereof of 1,000 µm or less, to the hydration treatment by still standing with contained water (Step S113) at normal temperature, the duration of the hydration treatment may be about 7 hours without interval, preferably 3 hours or more and 30 hours or less. When performing the hydration treatment by the still standing with contained water at 40°C or more and 60°C or less, the duration of the hydration treatment is preferably 0.5 hours or more and 8 hours or less, without interval.

When subjecting steelmaking slag, with the maximum particle diameter of the slag particles thereof of 1,000 µm or less, to the hydration treatment by still standing in wet condition (Step S114) at the relative humidity of 90% and at normal temperature, the duration of the hydration treatment may be about 10 hours without interval, preferably 1 hour or more and 40 hours or less. When performing the hydration treatment using a gas composed only of water vapor at 100°C or more, the duration of the hydration treatment may be 0.2 hours or more and 5 hours or less without interval.

Predetermined average particle size of steelmaking slag and conditions for the hydration treatment (e.g., temperature and duration) for satisfactorily increasing the recovery rate of calcium (for example, no higher recovery rate can be obtained) can be determined, and referred to from the next hydration treatment.

In addition, the hydration treatment is preferably continued until calcium silicate satisfactorily becomes hydrates and calcium hydroxide, and/or calcium iron aluminum oxide satisfactorily becomes hydroxides of calcium oxides. The hydration treatment is, for example, preferably continued until the amount of calcium silicate contained in steelmaking slag becomes 50 mass% or less, or calcium iron aluminum oxide in the steelmaking slag becomes 20 mass% or less.

### [Second Step: Bringing Steelmaking Slag into contact with CO₂ aqueous solution]

In the present step, steelmaking slag is immersed in a CO₂ aqueous solution to elute calcium contained in the steelmaking slag into the aqueous solution (Step S120-1).

The steelmaking slag may be immersed in water in which carbon dioxide is previously dissolved, or the steelmaking slag may be immersed in water followed by the dissolution of carbon dioxide in the water, in the present step. During the immersion of the steelmaking slag in the CO₂ aqueous solution, it is preferred that the steelmaking slag and the CO₂ aqueous solution are stirred for accelerating reactions.

Carbon dioxide can be dissolved in water by, for example, bubbling (blowing) a gas containing carbon dioxide. It is preferred that 30 mg/l or more of non-ionized carbon dioxide (free carbonate) is dissolved in the CO₂ aqueous solution for increasing elution of calcium from the steelmaking slag. The amount of free carbonate that may be contained in tap water in general is 3 mg/l or more and 20 mg/l or less.

The gas containing carbon dioxide may be pure carbon dioxide gas, or a gas containing carbon dioxide and components, such as oxygen and nitrogen in addition. Examples of the gases containing carbon dioxide include an exhaust gas after combustion, and a mixed gas of carbon dioxide, air and water vapor. For increasing elution of calcium compounds (e.g., calcium silicate) from the steelmaking slag into a CO₂ aqueous solution by increasing the concentration of carbon dioxide in the CO₂ aqueous solution, the gas containing carbon dioxide preferably contains carbon dioxide in high concentration (e.g. 90%).

During the elution of calcium, the amount of carbon dioxide in the CO₂ aqueous solution decreases with the dissolution of calcium since calcium reacts with carbon dioxide and forms water-soluble calcium hydrogen carbonate. Therefore, it is preferred to keep providing carbon dioxide to the CO₂ aqueous solution after the steelmaking slag is immersed in the CO₂ aqueous solution.

For satisfactorily eluting calcium contained in the slag, the amount of the steelmaking slag in a CO₂ aqueous solution is preferably 1 g/l or more or 100 g/l or less, and more preferably 2 g/l or more or 40 g/l or less. The immersion is performed preferably for three minutes or more, and more preferably for five minutes or more, for satisfactorily eluting calcium contained in the steelmaking slag.

### [Effects]

The present embodiment can hydrate calcium compounds (preferably calcium silicate and calcium iron aluminum oxide) contained in steelmaking slag to generate Ca hydrates which can be eluted into a CO₂ aqueous solution more easily, thereby eluting a larger amount of calcium into the CO₂ aqueous solution in a shorter period of time. The present embodiment can be performed easily, and thus the costs during the performance of the embodiment can be reduced.

### 1-1. First Modification

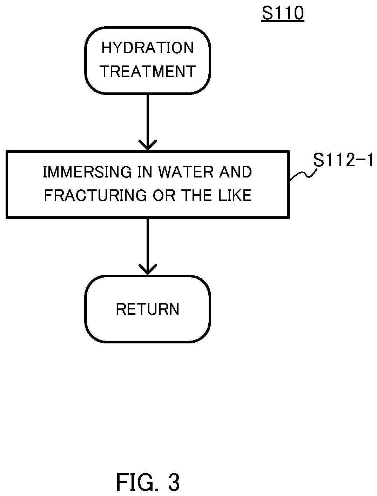

FIG. 3 is a flowchart of hydration treatment (Step S110) in the first modification of the above embodiment. As illustrated in FIG. 3, a method according to the present modification for eluting calcium from steelmaking slag performs hydration treatment (Step A110) by the immersing in water, and at the same time fractures or pulverizes the immersed steelmaking slag, or grinds the surface of the steelmaking slag (hereinafter, also simply referred to as a "fracturing or the like") (Step S112-1: hereinafter also referred to as "first modification step"). The description for a second step is omitted in the present modification as the second step can be performed in the same manner as in the above embodiment.

### [First Modification Step: Hydration Treatment performed by immersing in Water while fracturing or the like]

Reactions during the above described hydration treatment occur upon contact of calcium compounds with water in the vicinity of the surface of the steelmaking slag or inside the steelmaking slag. While water permeates through the steelmaking slag to some extent, a larger amount of water contacts the vicinity of the surface. Ca hydrates is thus more likely to be generated in the vicinity of the surface of the steelmaking slag. In addition, when components contained in the steelmaking slag dissolve in the water used for the hydration treatment, for example, silicon, aluminum, iron and manganese, and/or hydroxides, carbonates and/or hydrates thereof may remain or be precipitated on the surface of the steelmaking slag, as in the above described case of dissolution into a CO₂ aqueous solution. When the remaining or precipitated substances prevent water from permeating through the steelmaking slag, Ca hydrates becomes less likely to be generated inside the steelmaking slag.

Subjecting the steelmaking slag immersed in water to fracturing or the like during the hydration treatment, meanwhile, increases the surface area of slag particles, thereby increasing the contact area between the water and the slag particles. Subjecting the steelmaking slag immersed in water to fracturing or the like also continuously forms new surfaces where the above described substances do not remain or are not precipitated, and water can permeate through the steelmaking slag from the continuously formed new surfaces, and therefore, Ca hydrates becomes more likely to be generated even inside the steelmaking slag. Grinding the surface of the steelmaking slag removes the remaining or precipitated substances to increase the contact area between the water and the slag particles and allow water to permeate more easily through the steelmaking slag.

Specifically, steelmaking slag is immersed in water, and at the same time, a conventional crusher usable in a wet method is used, thereby fracturing the immersed steelmaking slag. Alternatively, performing the hydration treatment and pulverizing slag particles in water at the same time by rotating a ball mill charged with the slag particles, water and pulverizing balls.

The present step can easily elute calcium in an amount the same or larger and in a shorter period of time compared to the above embodiment including the first step. For example, when using steelmaking slag with the maximum particle diameter thereof of 1,000 µm or less, the duration of the present step is preferably 0.1 hour or more and 5 hours or less, and more preferably 0.2 hours or more and 3 hours or less, without interval.

The present step is preferably continued until the maximum particle diameter of the slag particles becomes 1,000 µm or less, preferably 500 µm or less, more preferably 250 µm or less, and even more preferably 100 µm or less. Therefore, the present step can be performed with the fracturing of steelmaking slag or the pulverizing of slag particles at the same time without complicating the steps.

### [Effects]

The first modification can elute a larger amount of calcium into a CO₂ aqueous solution in a shorter period of time. The present embodiment can be performed without complicating the steps, such as being performed with the fracturing steelmaking slag or the pulverizing slag particles at the same time, and thus the costs during the performance of the embodiment can be reduced.

### 1-2. Second Modification

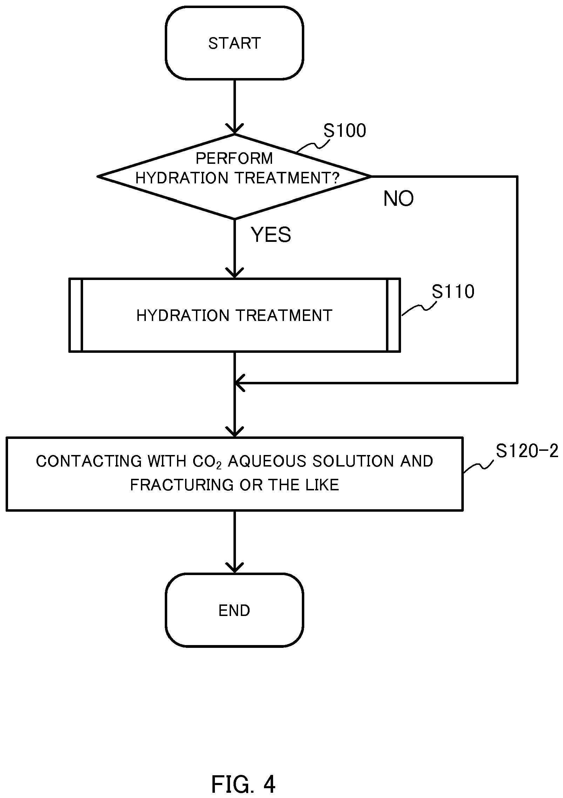

FIG. 4 is a flowchart of a method according another embodiment of the present invention for eluting calcium from steelmaking slag (hereinafter referred to as "second modification"). As illustrated in FIG. 4, a method according to the present modification for eluting calcium from steelmaking slag includes a step of selecting whether or not to subject the steelmaking slag to hydration treatment (Step SI00), a step of optionally subjecting the steelmaking slag to the hydration treatment (Step S110), and a step of bringing the steelmaking slag into contact with a CO₂ aqueous solution while subjecting the steelmaking slag to fracturing or the like (Step S120-2: hereinafter also referred to as "second modification step"). When to perform the hydration treatment is selected in Step S100, second modification step (Step S120-2) is performed after the step of subjecting the steelmaking slag to the hydration treatment (Step S110). When not to perform the hydration treatment is selected in Step S100, only second modification step (Step S120-2) is performed without performing the first step or the first modification step. The step of performing hydration treatment (Step S110) may be either the first step or the first modification step in the present modification. The description for the first step and the first modification step is omitted as they can be performed in the same manner as in the above embodiment.

### [Second Modification Step: Hydration Treatment of Steelmaking Slag]

Elution of calcium from steelmaking slag occurs upon contact of calcium compounds or Ca hydrates with a CO₂ aqueous solution in the vicinity of the surface of the steelmaking slag or inside the steelmaking slag. As with the steelmaking slag in contact with water as described above, while the CO₂ aqueous solution permeates through the steelmaking slag to some extent, a larger amount of the CO₂ aqueous solution contacts the vicinity of the surface. Therefore, calcium is more likely to be eluted from the vicinity of the surface of the steelmaking slag. In addition, when components contained in the steelmaking slag dissolve in the CO₂ aqueous solution, for example, silicon, aluminum, iron and/or manganese, and/or hydroxides, carbonates and/or hydrates thereof may remain or be precipitated on the surface of the steelmaking slag, as described above. When the remaining or precipitated substances prevent the CO₂ aqueous solution from permeating through the steelmaking slag, calcium becomes less likely to be eluted from the inside of the steelmaking slag.

Meanwhile, when bringing steelmaking slag into contact with a CO₂ aqueous solution, subjecting the steelmaking slag in contact with the CO₂ aqueous solution to fracturing or the like increases the surface area of slag particles, thereby increasing the contact area between the CO₂ aqueous solution and the slag particles. Subjecting the steelmaking slag in contact with the CO₂ aqueous solution to fracturing or the like also continuously forms new surfaces where the above described substances do not remain or are not precipitated, and the CO₂ aqueous solution can permeate through the steelmaking slag from the continuously formed new surfaces, and therefore, calcium becomes more likely to be eluted even from the inside of the steelmaking slag. Grinding the surface of the steelmaking slag removes the remaining or precipitated substances to increase the contact area between the CO₂ aqueous solution and the slag particles and allow the CO₂ aqueous solution to permeate more easily through the steelmaking slag.

The method for subjecting the steelmaking slag to fracturing or the like in the present step may be substantially the same as the method for subjecting steelmaking slag to fracturing or the like in the first modification step. Specifically, steelmaking slag is immersed in a CO₂ aqueous solution, and at the same time, a conventional crusher usable in a wet method is used, thereby fracturing the immersed steelmaking slag. Alternatively, slag particles may be subjected to pulverizing in a CO₂ aqueous solution and at the same time to fracturing or the like by rotating a ball mill charged with the slag particles, the CO₂ aqueous solution and pulverizing balls.

The present step is preferably continued until the maximum particle diameter of the slag particles becomes 1,000 µm or less, preferably 500 µm or less, more preferably 250 µm or less, and even more preferably 100 µm or less, for increasing the elution amounts of calcium.

### [Effects]

The second modification can elute a larger amount of calcium into a CO₂ aqueous solution in a shorter period of time. The present modification can be easily performed, and thus the costs during the performance of the modification can be reduced.

### 2. Method for recovering Calcium from Steelmaking Slag

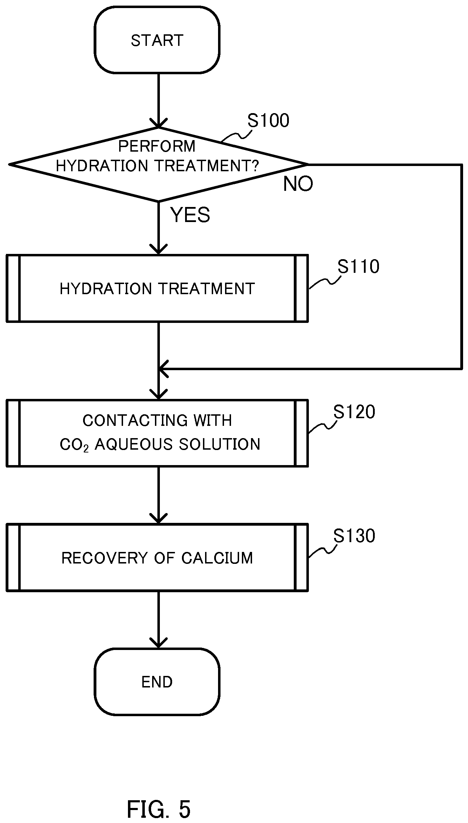

FIG. 5 is a flowchart of a method according to another embodiment of the present invention for recovering calcium from steelmaking slag. As illustrated in FIG. 5, the method according to the present embodiment for recovering calcium from steelmaking slag includes a step of eluting calcium from the steelmaking slag by one of the above described methods, and a step of recovering the eluted calcium. Specifically, the method according to the present embodiment for recovering calcium from steelmaking slag includes a step of selecting whether or not to subject the steelmaking slag to hydration treatment (Step S100), a step of optionally subjecting the steelmaking slag to the hydration treatment (Step S110), bringing the steelmaking slag into contact with a CO₂ aqueous solution (Step S120) and a step of recovering calcium eluted into the CO₂ aqueous solution (Step S130). The description for Steps S100 and S110 in the present embodiment is omitted as they can be performed in the same manner as one of the described methods.

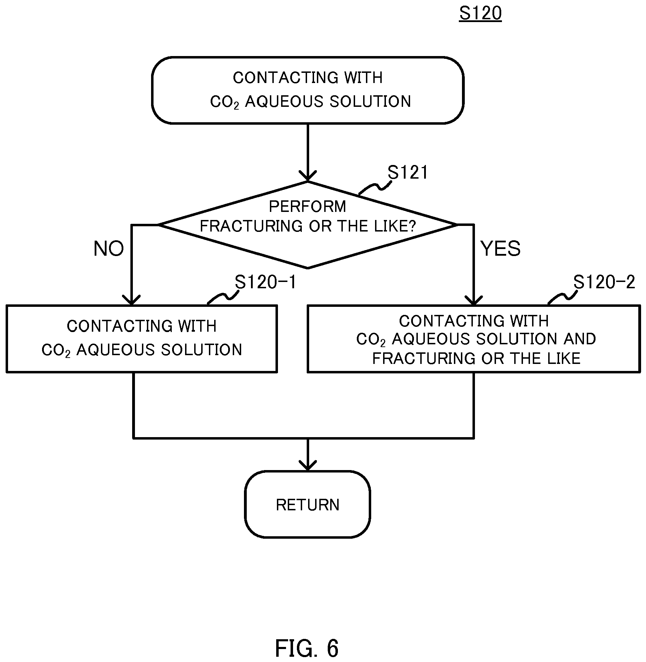

FIG. 6 is a flowchart of a step of bringing steelmaking slag into contact with a CO₂ aqueous solution (Step S120), in the present embodiment. As illustrated in FIG. 6, the step of bringing steelmaking slag into contact with a CO₂ aqueous solution (Step S120) includes a step of selecting whether or not to subject the steelmaking slag to fracturing or the like while in contact with the CO₂ aqueous solution (Step S121), and a step of bringing the steelmaking slag into contact with the CO₂ aqueous solution by a method selected from the following: the second step (Step S120-1) of bringing the slag into contact with the solution without performing the fracturing or the like, and the second modification step (Step S120-2) of bringing the slag into contact with the solution while performing the fracturing or the like. The description for Steps S120-1 and S120-2 in the present embodiment is omitted as they can be performed in the same manner as one of the described methods.

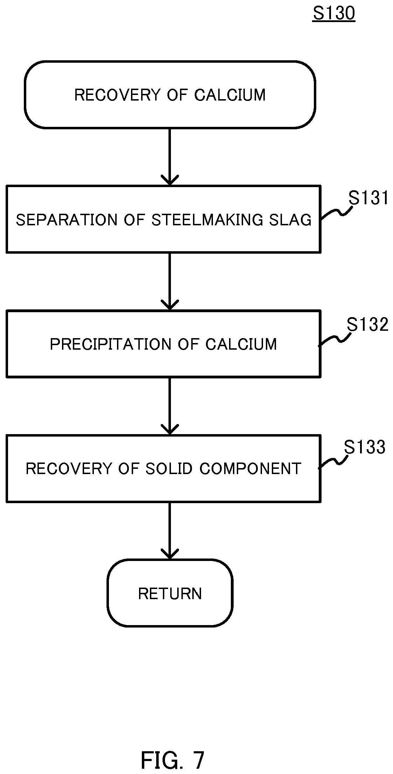

FIG. 7 is an exemplary flowchart of a step of recovering calcium eluted in a CO₂ aqueous solution (Step S130) in the present embodiment. As illustrated in FIG. 7, the step of recovering calcium (Step S130) includes for its performance, for example, a step of separating steelmaking slag from a CO₂ aqueous solution (Step S131: hereinafter also referred to as "third step"), a step of precipitating calcium (Step S132: hereinafter also referred to as "fourth step"), and a step of recovering a precipitated solid component (Step S133: hereinafter also referred to as "fifth step").

### [Third Step: Separation of Steelmaking Slag from CO₂ aqueous solution]

In the present step, steelmaking slag is separated from a CO₂ aqueous solution (supernatant) having calcium dissolved therein. The separation may be performed by any conventional method. Examples of separating methods include filtration, and a method in which the steelmaking slag settles out by leaving the CO₂ aqueous solution to stand. In the case where the slag settles out, only the supernatant may further be recovered, or subsequent steps may be performed only to the supernatant in a two-component system containing the supernatant and the steelmaking slag that settles out as long as a solid component precipitated in a subsequent step is not mixed with the steelmaking slag.

### [Fourth step: Precipitation of Solid Component containing Calcium]

Calcium eluted into a CO₂ aqueous solution may be precipitated as a solid component containing calcium by any conventional method (Step S132). Examples of the method for precipitating calcium eluted in a CO₂ aqueous solution as a solid component include a method that removes carbon dioxide from the CO₂ aqueous solution, and a method that increases the pH of the CO₂ aqueous solution.

### (Removal of Carbon Dioxide)

Calcium eluted into a CO₂ aqueous solution in the second step (Step S120) can be precipitated by removing carbon dioxide from the CO₂ aqueous solution separated from steelmaking slag in the third step (Step S131). Examples of calcium compounds to be precipitated in this procedure include calcium carbonate, calcium carbonate hydrate and calcium hydroxide.

Any method can be employed for removing carbon dioxide from a CO₂ aqueous solution. Examples of the methods for removing carbon dioxide include (1) gas introduction, (2) pressure reduction and (3) heating.

### (1) Gas Introduction

Carbon dioxide can be removed from the CO₂ aqueous solution by introducing into the CO₂ aqueous solution having calcium dissolved therein a gas having a partial pressure of carbon dioxide lower than the equilibrium pressure of carbon dioxide in the CO₂ aqueous solution to replace the dissolved carbon dioxide by the introduced gas, or to diffuse (transfer) carbon dioxide into bubbles of the introduced gas. While the gas to be introduced may be a gas reactive to water (such as chlorine and sulfur dioxide), a gas having low reactivity to water is preferred for suppressing the reduction of the precipitated calcium amount due to the formation of salts from the eluted calcium and ions generated by the introduction of a gas reactive to water into the CO₂ aqueous solution. The gas to be introduced into the CO₂ aqueous solution may be an inorganic gas or an organic gas. An inorganic gas is more preferred since the possibility of combustion or explosion is low when the gas leaks outside. Examples of the inorganic gases having low reactivity to water include air, nitrogen, oxygen, hydrogen, argon, helium and mixed gases thereof. An example of the mixed gas is air in the environment where the present step is performed, which contains nitrogen and oxygen in an approximate ratio of 4 to 1. Examples of the organic gases having low reactivity to water include methane, ethane, ethylene, acetylene, propane and fluorocarbons.

### (2) Pressure Reduction

Under the pressure environment of about one atmospheric pressure (about 100 kPa) or less, the solubility of carbon dioxide decreases when the pressure applied on a CO₂ aqueous solution decreases. Therefore, carbon dioxide can be removed from the CO₂ aqueous solution by placing the CO₂ aqueous solution under a reduced-pressure environment. For example, carbon dioxide can be removed by putting the CO₂ aqueous solution into an airtight container and evacuating air (degassing) of the container using, e.g., a pump to allow the container to have a reduced-pressure atmosphere. For further increasing the amount of removed carbon dioxide, the pressure reduction may be simultaneously performed with applying ultrasonic waves to the CO₂ aqueous solution or stirring the CO₂ aqueous solution.

### (3) Heating

Under the pressure environment of about one atmospheric pressure (about 100 kPa) or less, the solubility of carbon dioxide decreases when the temperature of a CO₂ aqueous solution increases. Therefore, carbon dioxide can be removed from the CO₂ aqueous solution by heating the CO₂ aqueous solution. For lowering heating costs, the CO₂ aqueous solution is preferably heated to a temperature within such a range that the vapor pressure of the solution does not exceed the pressure in the atmosphere. When the pressure in the atmosphere is one atmospheric pressure, for example, the heating temperature is preferably less than 100°C. Heating the CO₂ aqueous solution not only removes carbon dioxide, but also lowers the solubility of calcium compounds (e.g., calcium carbonate), and thus calcium can be precipitated more easily.

The above methods (1) to (3) may be performed in a combination for further increasing the amount of removed carbon dioxide. The most suitable combination can be selected in view of, for example, a delivery system of a gas or heat, a site location, or availability of a by-product gas in a factory.

For example, while keeping the gas introduction into the CO₂ aqueous solution, air evacuation is performed in the amount of or more than the amount of the introduced gas to achieve a reduced-pressure atmosphere. In such a manner, the gas introduction can provide effects of removing carbon dioxide and stirring, and the pressure reduction of the CO₂ aqueous solution can provide an effect of removing carbon dioxide, and thus carbon dioxide can be removed effectively. Heating in addition to this procedure can further accelerate removal effects of carbon dioxide. Since the additive effects of the gas introduction into the CO₂ aqueous solution and pressure reduction of the CO₂ aqueous solution can easily remove carbon dioxide, the heating temperature is not necessarily high, and thus heating costs can be reduced.

### (Increasing pH)

Increasing the pH of the CO₂ aqueous solution separated from the steelmaking slag can precipitate a solid component containing calcium in the CO₂ aqueous solution. The amount of hydrogen ions (H⁺) in the CO₂ aqueous solution decreases when the pH increases, and thus the equilibrium in the equilibrium equation (Equation 3) described below moves in such a direction that a hydrogen carbonate ion (HCO₃⁻ ) is separated into a hydrogen ion (H⁺) and a carbonate ion (CO₃²⁻). In the present step, it is considered that calcium is precipitated due to the increased carbonate ions becoming poorly-soluble calcium carbonate (CaCO₃) by bonding with calcium ions.

HCO₃⁻ ⇄ H⁺ + CO₃²⁻ (Equation 3)

When the precipitation of calcium starts, cloudiness caused by calcium carbonate is generated in the CO₂ aqueous solution. It is sufficient to continue increasing the pH of the CO₂ aqueous solution until the cloudiness can be confirmed by visual observation. For further increasing the recovery rate of calcium by precipitating calcium more sufficiently, the pH of the CO₂ aqueous solution separated from the steelmaking slag in the third step (Step S131) is increased preferably by 0.2 or more, more preferably by 0.3 or more, still more preferably by 1.0 or more, even more preferably by 1.5 or more, and particularly preferably by 2.0 or more.

The pH is preferably increased while measuring the pH of the CO₂ aqueous solution. The pH of the CO₂ aqueous solution can be measured by any conventional glass electrode method.

While solid components containing not only calcium but also other elements, such as phosphorus are precipitated in the present step, according to the present inventors' findings, the content ratio of compounds including phosphorus (hereinafter, also simply referred to as a "phosphorus compounds") in a solid component precipitated immediately after the start of increasing pH (hereinafter also referred to as "early stage precipitate") is higher, and the content ratio of phosphorus in a solid component precipitated later (hereinafter also referred to as "later stage precipitate") is lower. Therefore, recovering the early stage precipitate by performing a below-described step of recovering (Step S133) during the step of increasing pH can recover a solid component with a higher phosphorus ratio and a solid component with a lower phosphorus ratio separately.

Phosphorus compounds recovered from steelmaking slag can be reused as a phosphorus source. Therefore, recovery of the solid component with a high content of the phosphorus compounds enables easy reuse of phosphorus. While calcium compounds recovered from steelmaking slag can be reused as iron-making materials, produced iron would become brittle when the iron-making materials contain phosphorus compounds. The content of the phosphorus compounds in the solid component for reuse as an iron-making material is thus preferably low. Therefore, when a solid component containing phosphorus compounds in a large amount, and a solid component containing phosphorus compounds in a small amount are separately obtained from a CO₂ aqueous solution containing phosphorus and calcium, refining of the recovered solid component becomes easier or unnecessary, and also the quality of a product made from the recovered solid component can be further improved.

During this procedure, a large portion of phosphorus is precipitated before the pH of the CO₂ aqueous solution increases by 1.0. For further increasing the content ratio of phosphorus in the early stage precipitate and that of calcium in the later stage precipitate, the early stage precipitate is recovered before the pH increases by preferably 1.0, more preferably 0.6, and still more preferably 0.4.

The pH of a CO₂ aqueous solution can be increased by, for example, adding an alkaline substance into the CO₂ aqueous solution. Examples of the alkaline substances that can be fed into the CO₂ aqueous solution include calcium hydroxide, ammonia and sodium hydroxide. Calcium hydroxide, ammonia or sodium hydroxide can be fed by dissolving the same in water, and adding the resultant solution to the CO₂ aqueous solution. Calcium hydroxide, ammonia and sodium hydroxide each may be a commercial product, or a substance contained in a liquid such as a waste fluid. In the case of adding calcium hydroxide contained in a waste fluid, a waste fluid generated during the production of acetylene by reacting, e.g., calcium carbide with water can be added to the CO₂ aqueous solution. In the case of adding calcium hydroxide, slag-immersed water provided by immersing steelmaking slag into water, or water used for hydration treatment in the first step or first modification step may be fed into the CO₂ aqueous solution. The slag-immersed water may be obtained by immersing the steelmaking slag from which calcium is to be recovered in water prior to the hydration treatment (Step S110), or by immersing another steelmaking slag in water.

Increasing the pH of a CO₂ aqueous solution also causes precipitation of, for example, iron, manganese and phosphorus contained in the CO₂ aqueous solution as the solid component. Accordingly, the CO₂ aqueous solution after the removal of calcium therefrom by the method according to the present embodiment allows waste water treatment to become simpler or unnecessary, thereby suppressing the waste water treatment cost.

For further increasing the recovery rate of calcium, removal of carbon dioxide may be performed in combination with the increasing pH.

### [Fifth Step: Recovering of Solid Component]

In the present step, a solid component precipitated in the fourth step is recovered (Step S133). The precipitated solid component can be recovered by any conventional method, such as vacuum filtration or pressure filtration. The solid component contains calcium derived from steelmaking slag.

Hereinafter, the present invention will be described more specifically with reference to Examples. However, these Examples do not limit the scope of present invention to the specific methods described below.

### Examples

### [Experiment 1]

Experiment 1 shows examples where steelmaking slag is subjected to hydration treatment, and subsequently brought into contact with an aqueous solution containing carbon dioxide, thereby eluting calcium from the steelmaking slag.

Steelmaking slag having a component ratio as shown in Table 1 was prepared. The components of the steelmaking slag were measured by ICP optical emission spectrometry and chemical analysis. The slag was pulverized using a hammer mill so that the maximum particle diameter thereof became 200 µm. The maximum particle diameter of the pulverized slag was confirmed using a laser diffraction/scattering type particle size distribution measuring device and a sieve with opening of 200 µm.

### [Table 1]

**Table 1: Component Ratio of Slag**

| | Component Ratio (mass%) | | | | | | |
|---|---|---|---|---|---|---|---|
| | Ca | Fe | Si | Mn | Mg | Al | P |
| Slag | 33.0 | 13.0 | 6.5 | 3.2 | 2.1 | 1.8 | 0.8 |

### 1-1. Hydration Treatment

The pulverized steelmaking slag was subjected to the hydration treatment by one of the following methods.

### 1-1-1. Immersing in Water

The steelmaking slag was put into water having an amount of 50 mass% relative to the mass of the steelmaking slag, stirred, and subsequently left to stand for a period of time as shown in Table 2. During the standing, the steelmaking slag sank in the water. The water temperature during the standing was adjusted to 25°C or 50°C.

### 1-1-2. Still Standing with Contained Water

To steelmaking slag, water in an amount of 27% relative to the mass of the steelmaking slag was added, followed by kneading the resultant mixture into a paste so that the whole steelmaking slag contains water. The paste-formed steelmaking slag containing water was put into a container and covered with a lid for prevention of drying, and subsequently left to stand for a period of time as shown in Table 2. The temperature of the paste during the standing was adjusted to 25°C.

### 1-1-3. Still Standing in Wet Condition

In a chamber of a horizontal agitator filled with air having a temperature of 25°C and a relative humidity of 95%, where the inside gas component was kept stirred, steelmaking slag was left to stand for a period of time as shown in Table 2. The pressure inside the chamber during the standing was set to the atmospheric pressure (about one atmospheric pressure (about 0.1 MPa)).

### 1-2. Contact with Aqueous Solution containing Carbon Dioxide

The steelmaking slag subjected to the hydration treatment was suspended in 501 water in a container. When clusters having a large particle diameter are formed from particles of the steelmaking slag bonded together with a low strength, all the clusters were crushed using a roller, and then the steelmaking slag was immersed into the water. The water having the steelmaking slag suspended therein was stirred using an impeller while carbon dioxide was blown into the water at the flow rate of 8 l/min at normal temperature (20 to 30°C).

After 60 minutes, the resultant aqueous solution was separated, and the amount (kg/501) of calcium eluted into the aqueous solution was measured by ICP spectrometry and chemical analysis. The elution rate (%) of calcium for the above treatment was calculated by dividing the measured calcium amount by a value obtained from the mass of immersed steelmaking slag multiplied by the Ca component ratio in the steelmaking slag (Examples 1 to 15).

For comparison, steelmaking slag not subjected to the hydration treatment was subjected to the same treatment, and the amount of eluted calcium and the elution rate of calcium were obtained in the same manner (Comparative Examples 1 and 2).

Table 2 shows the types, temperatures and periods of time of hydration treatment performed on the immersed steelmaking slag, the amounts of the immersed steelmaking slag, the methods that brought the steelmaking slag into contact with an aqueous solution containing carbon dioxide (Ca elution methods), the elution amounts of calcium (kg/501), and the elution rates of calcium (%).

### [Table 2]

**Table 2: Hydration Treatment Conditions and Elution Amount and Elution Rate of Calcium**

| Category | Hydration Treatment | Hydration Treatment Temperature (°C) | Hydration Time (Time) | Slug Amount (kg/501) | Ca Elution Method | Ca Elution Amount (kg/501) | Ca Elution Rate (%) |
|---|---|---|---|---|---|---|---|
| Ex. 1 | Immersing in Water | 25 | 5 | 0.25 | Stirring | 0.0357 | 43.2 |
| Ex. 2 | Immersing in Water | 25 | 24 | 0.25 | Stirring | 0.0360 | 43.6 |
| Ex. 3 | Immersing in Water | 50 | 1 | 0.25 | Stirring | 0.0355 | 43.0 |
| Ex. 4 | Still Standing with Contained Water | 25 | 3 | 0.25 | Stirring | 0.0360 | 43.6 |
| Ex. 5 | Still Standing with Contained Water | 25 | 5 | 0.25 | Stirring | 0.0362 | 43.9 |
| Ex. 6 | Still Standing with Contained Water | 25 | 24 | 0.25 | Stirring | 0.0363 | 43.9 |
| Ex. 7 | Still Standing in Wet Condition | 25 | 5 | 0.25 | Stirring | 0.0350 | 42.4 |
| Ex. 8 | Still Standing in Wet Condition | 25 | 10 | 0.25 | Stirring | 0.0357 | 43.6 |
| Ex. 9 | Still Standing in Wet Condition | 25 | 24 | 0.25 | Stirring | 0.0363 | 43.9 |
| Comp. Ex. 1 | None | - | - | 0.25 | Stirring | 0.0295 | 35.8 |
| Ex. 10 | Immersing in Water | 25 | 5 | 0.50 | Stirring | 0.0675 | 41.7 |
| Ex. 11 | Immersing in Water | 50 | 2 | 0.50 | Stirring | 0.0678 | 41.1 |
| Ex. 12 | Still Standing with Contained Water | 25 | 5 | 0.50 | Stirring | 0.0688 | 41.7 |
| Ex. 13 | Still Standing with Contained Water | 25 | 12 | 0.50 | Stirring | 0.0686 | 41.6 |
| Ex. 14 | Still Standing in Wet Condition | 25 | 5 | 0.50 | Stirring | 0.0660 | 40.0 |
| Ex. 15 | Still Standing in Wet Condition | 25 | 24 | 0.50 | Stirring | 0.0667 | 40.4 |
| Comp. Ex. 2 | None | - | - | 0.50 | Stirring | 0.0565 | 34.2 |

The elution amount and elution rate of calcium increased when steelmaking slag subjected to hydration treatment was brought into contact with an aqueous solution containing carbon dioxide compared to when steelmaking slag not subjected to hydration treatment was brought into contact with an aqueous solution containing carbon dioxide. Setting to 50°C the temperature of water used for the hydration treatment by the immersing in water could have eluted calcium in a shorter period of time.

### [Experiment 2]

Experiment 2 shows examples where steelmaking slag was brought into contact with an aqueous solution containing carbon dioxide while being pulverized, thereby eluting calcium from the steelmaking slag.

### 2-1. Hydration Treatment

Steelmaking slag prepared in Experiment 1, which was pulverized so that the maximum particle diameter thereof became 200 µm, was subjected to the hydration treatment in the same procedure as in Experiment 1, namely by one of the methods of immersing in water, still standing with contained water, and still standing in wet condition. The hydration treatment was performed for the period of time as shown in Table 3. The hydration treatment was not performed on some of the prepared steelmaking slag.

### 2-2. Contact with Aqueous Solution containing Carbon Dioxide

The container of a ball mill was charged with the steelmaking slag subjected to the hydration treatment or the steelmaking slag not subjected to the hydration treatment, 1001 water and pulverizing balls with an apparent volume of 201. Subsequently, the container was rotated at a peripheral speed of 100 m/min while carbon dioxide was blown into the container at the flow rate of 15 l/min at normal temperature (20 to 30°C). The ball diameter of the pulverizing balls was 10 mm.

After 30 minutes, the resultant aqueous solution was separated, and the amount (kg/1001) of calcium eluted into the aqueous solution was measured by ICP spectrometry. The elution rate (%) of calcium for the above treatment was calculated by dividing the measured calcium amount by a value obtained from the mass of immersed steelmaking slag multiplied by the Ca component ratio in the steelmaking slag (Examples 21 to 27).

For comparison, steelmaking slag not subjected to the hydration treatment was immersed in 1001 water in the container, and then stirred for 30 minutes using an impeller without performing the fracturing or the like while carbon dioxide was blown into the container at the flow rate of 15 l/min at normal temperature (20 to 30°C) (Comparative Example 21). Subsequently, the amount of eluted calcium and the elution rate of calcium were obtained in the same manner.

Table 3 shows the types, temperatures, and periods of time of hydration treatment performed on the immersed steelmaking slag, the amounts of the immersed steelmaking slag, the methods that brought the steelmaking slag into contact with an aqueous solution containing carbon dioxide (Ca elution method), the elution amounts of calcium (kg/1001), and the elution rates of calcium (%).

### [Table 3]

**Table 3: Hydration Treatment Conditions and Elution Amount and Elution Rate of Calcium**

| Category | Hydration Treatment | Hydration Treatment Temperature (°C) | Hydration Time (Time) | Slug Amount (kg/1 001) | Ca Elution Method | Ca Elution Amount (kg/1001) | Ca Elution Rate (%) |
|---|---|---|---|---|---|---|---|
| Ex. 21 | None | - | - | 0.5 | Ball Mill | 0.0800 | 48.5 |
| Ex. 22 | Immersing in Water | 25 | 3 | 0.5 | Ball Mill | 0.0905 | 54.9 |
| Ex. 23 | Immersing in Water | 25 | 5 | 0.5 | Ball Mill | 0.0900 | 54.6 |
| Ex. 24 | Immersing in Water | 25 | 24 | 0.5 | Ball Mill | 0.0910 | 55.2 |
| Ex. 25 | Still Standing with Contained Water | 25 | 3 | 0.5 | Ball Mill | 0.0910 | 55.2 |
| Ex. 26 | Still Standing with Contained Water | 25 | 15 | 0.5 | Ball Mill | 0.0920 | 55.8 |
| Ex. 27 | Still Standing in Wet Condition | 25 | 24 | 0.5 | Ball Mill | 0.0890 | 53.9 |
| Comp. Ex. 21 | None | - | - | 0.5 | Stirring | 0.0413 | 25.0 |

The elution amount and elution rate of calcium increased when steelmaking slag was brought into contact with an aqueous solution containing carbon dioxide while the steelmaking slag was pulverized compared to when steelmaking slag was brought into contact with an aqueous solution containing carbon dioxide while the steelmaking slag was only stirred. In Experiment 2, the period of time during which the steelmaking slag was in contact with the aqueous solution containing carbon dioxide was short but the elution amount and elution rate of calcium were high, as compared to Experiment 1. In particular, the elution amount and elution rate of calcium further increased when steelmaking slag subjected to the hydration treatment was brought into contact with the aqueous solution containing carbon dioxide while the steelmaking slag was pulverized. Even without performing the hydration treatment on the steelmaking slag, the elution rate of calcium was higher than Experiment 1.

### [Experiment 3]

Experiment 3 shows examples where steelmaking slag was subjected to hydration treatment while being pulverized, and subsequently brought into contact with an aqueous solution containing carbon dioxide, thereby eluting calcium from the steelmaking slag.

### 3-1. Hydration Treatment

The container of a ball mill was charged with the steelmaking slag prepared in Experiment 1, which was pulverized so that the maximum particle diameter thereof became 200 µm, 2.51 water and pulverizing balls with an apparent volume of 1.01, and then hydration treatment was performed by rotating the container at a peripheral speed of 180 m/min at normal temperature (20 to 30°C). The ball diameter of the pulverizing balls was 10 mm.

### 3-2. Contact with Aqueous Solution containing Carbon Dioxide

The steelmaking slag subjected to the hydration treatment was brought into contact with an aqueous solution containing carbon dioxide by one of the following methods.

### 3-2-1. In Contact while stirred

The steelmaking slag subjected to the hydration treatment was transferred, after the pulverizing balls were removed therefrom, to another container, and the container was charged with water so that the water amount thereof became 501. The resultant steelmaking slag suspension was stirred using an impeller while carbon dioxide was blown into the container at the flow rate of 7 l/min at normal temperature (20 to 30°C).

### 3-2-2. In Contact while further pulverized

The steelmaking slag subjected to the hydration treatment was transferred, after the pulverizing balls were removed therefrom, to another ball mill, and the ball mill was charged with water so that the water amount thereof became 501. The container of the ball mill was further charged with pulverizing balls with an apparent volume of 101, and then the container was rotated at a peripheral speed of 100 m/min while carbon dioxide was blown into the container at the flow rate of 7 1/min at normal temperature (20 to 30°C). The ball diameter of the pulverizing balls was 10 mm.

After 30 minutes, the resultant aqueous solution was separated, and the amount (kg/501) of calcium eluted into the aqueous solution was measured by ICP spectrometry and chemical analysis. The elution rate (%) of calcium for the above treatment was calculated by dividing the measured calcium amount by a value obtained from the mass of immersed steelmaking slag multiplied by the Ca component ratio in the steelmaking slag (Examples 31 to 33).

For comparison, steelmaking slag not subjected to the hydration treatment was immersed in 501 water in the container, and then stirred the resultant steelmaking slag suspension for 30 minutes using an impeller while carbon dioxide was blown into the container at the flow rate of 7 1/min at normal temperature (20 to 30°C). Subsequently, the amount of eluted calcium and the elution rate of calcium were obtained in the same manner (Comparative Example 31).

Table 4 shows the types, temperatures, and periods of time of hydration treatment performed on the immersed steelmaking slag, the amounts of the immersed steelmaking slag, the methods that brought the steelmaking slag into contact with an aqueous solution containing carbon dioxide (Ca elution method), the elution amounts of calcium (kg/501), and the elution rates of calcium (%).

### [Table 4]

**Table 4: Hydration Treatment Conditions and Elution Amount and Elution Rate of Calcium**

| Category | Hydration Treatment | Hydration Treatment Temperature (°C) | Hydration Time (Time) | Slug Amount (kg/1001) | Ca Elution Method | Ca Elution Amount (kg/501) | Ca Elution Rate (%) |
|---|---|---|---|---|---|---|---|
| Ex. 31 | Ball Mill | 25 | 0.5 | 0.5 | Stirring | 0.0360 | 43.6 |
| Ex. 32 | Ball Mill | 25 | 0.25 | 0.5 | Ball Mill | 0.0466 | 56.5 |
| Ex. 33 | Ball Mill | 25 | 0.5 | 0.5 | Ball Mill | 0.0496 | 60.1 |
| Comp. Ex. 31 | None | - | - | 0.5 | Stirring | 0.0205 | 24.8 |

The elution amount and elution rate of calcium increased when steelmaking slag subjected to hydration treatment while the steelmaking slag is pulverized was brought into contact with an aqueous solution containing carbon dioxide compared to when steelmaking slag not subjected to hydration treatment was brought into contact with an aqueous solution containing carbon dioxide. In Experiment 3, the period of time during which the steelmaking slag was in contact with the aqueous solution containing carbon dioxide was short but the elution amount and elution rate of calcium were at the same level or high, as compared to Experiments 1 and 2.

This application claims priority based on Japanese Patent Application No. 2016-060493, filed on March 24, 2016, the entire contents of which including the claims, the specification and the drawings are incorporated herein by reference.

### Industrial Applicability

The method according to the present invention for eluting calcium can easily increase the elution amount of calcium from steelmaking slag into an aqueous solution containing carbon dioxide, as well as the recovery rate of calcium from the steelmaking slag, and therefore is advantageous as a method for recovering a calcium source in an iron-making process.

## Claims

1. A method for eluting calcium from steelmaking slag, the method comprising:
subjecting the steelmaking slag to hydration treatment; and
bringing the steelmaking slag that has been subjected to the hydration treatment into contact with an aqueous solution containing carbon dioxide.

2. The method according to claim 1, wherein the hydration treatment includes immersing the steelmaking slag in water.

3. The method according to claim 2, wherein, in the subjecting the steelmaking slag to the hydration treatment, the steelmaking slag immersed in the water is fractured or pulverized, or a surface of the steelmaking slag immersed in the water is ground.

4. The method according to claim 2 or 3, wherein the water to be used for the hydration treatment contains less than 300 mg/l of carbon dioxide.

5. The method according to claim 1, wherein the hydration treatment includes:
adding water to the steelmaking slag, wherein the steelmaking slag has been fractured or pulverized; and
kneading the water-added steelmaking slag into a paste, followed by leaving the paste to stand.

6. The method according to claim 1, wherein the hydration treatment includes leaving the steelmaking slag to stand in a container including water vapor with a relative humidity of 70% or more.

7. The method according to any one of claims 1 to 6, wherein, in the bringing the steelmaking slag into contact with the aqueous solution containing carbon dioxide, the steelmaking slag in contact with the aqueous solution containing carbon dioxide is fractured or pulverized, or a surface of the steelmaking slag in contact with the aqueous solution containing carbon dioxide is ground.

8. A method for eluting calcium from steelmaking slag, the method comprising:
bringing the steelmaking slag into contact with an aqueous solution containing carbon dioxide, and
during the bringing of the steelmaking slag into contact with the aqueous solution, pulverizing the steelmaking slag or grounding a surface of the steelmaking slag.

9. The method according to claim 8, wherein the steelmaking slag has been subjected to hydration treatment.

10. A method for recovering calcium from steelmaking slag, the method comprising:
eluting the calcium from the steelmaking slag by the method according to any one of claims 1 to 9; and
recovering the eluted calcium.
